## Europäisches Patentamt
## European Patent Office
## Office européen des brevets

(11) Publication number: **0 021 481**
**B2**

(12) **NEW EUROPEAN PATENT SPECIFICATION**

(45) Date of publication of the new patent specification: **04.04.90**

(21) Application number: **80200507.4**

(22) Date of filing: **02.06.80**

(51) Int. Cl.⁵: **A 23 L 1/226,** A 23 D 7/00

(54) Artifically flavoured edible oils or fats.

(30) Priority: **12.06.79 US 47831**

(43) Date of publication of application:
**07.01.81 Bulletin 81/01**

(45) Publication of the grant of the patent:
**16.02.83 Bulletin 83/07**

(45) Mention of the opposition decision:
**04.04.90 Bulletin 90/14**

(84) Designated Contracting States:
**BE DE FR GB IT NL**

(56) References cited:
| | |
|---|---|
| GB-A-1 068 712 | US-A-3 653 921 |
| GB-A-1 224 989 | US-A-3 819 838 |
| JP-A-56 036 891 | US-A-3 867 556 |
| US-A-3 389 000 | US-A-3 930 046 |
| US-A-3 652 297 | |

Cereal Science Today 17 (April 1972), pp. 107-109
The Flavour Industry (December 1972), pp. 596-600
Food Product Development (December 1976), pp. 54+56-57

(73) Proprietor: **THE PROCTER & GAMBLE COMPANY**
**301 East Sixth Street**
**Cincinnati Ohio 45202 (US)**

(72) Inventor: **Japikse, Cornelis Hendrikus**
**8519 Foxcroft Drive**
**Cincinnati, Ohio 45231 (US)**
Inventor: **Millisor, Daniel Herman**
**60 Twilight Drive**
**Fairfield, Ohio 45014 (US)**
Inventor: **Rosekrans, David deLaittre**
**3256 Haristy Avenue**
**Cincinnati, Ohio 45208 (US)**

(74) Representative: **Brooks, Maxim Courtney et al**
**Procter & Gamble (NTC) Limited Whitley Road Longbenton**
**Newcastle-upon-Tyne NE12 9TS (GB)**

## Description

This invention relates to artificially flavored edible oils or fats.

Butter or margarines generally do not develop an unpleasant odor at room temperature or upon heating. Oleaginous materials which contain artificial butter flavors having the same ingredients as butter often develop an unpleasant odor at room temperature and also when heated. This is particularly true when these artificial butter flavors are used in a non-aqueous medium, for example, frying or grilling fats and cooking oils.

The unpleasant aroma of these flavored goods is caused primarily by the volatilization of certain flavor components such as butyric acid, hexanoic acid and diacetyl which are either insoluble or only slightly soluble in oils. In butter or margarines, these volatile components are dissolved in the water portion of a water-in-oil emulsion, and thus are not as readily available for volatilization.

The problem of unpleasant odor development in artificial butter flavors due to volatilization has long been recognised. U.S.—A—2,527,785, issued to Armstrong in 1950, attempts to solve this problem by incorporating the butyricacid as a non-volatile salt, for example, sodium butyrate. The flavor solution, however, has to be buffered to keep the salt from hydrolyzing.

Others have tried to overcome the problem by encapsulating the total butter flavor using water-soluble encapsulating ingredients. However, when these encapsulated systems are added to edible oils, the flavored oils do not have a pleasant buttery aroma at room temperature. ·

Surprisingly, it has been found that partial encapsulation of the flavor, i.e. encapsulation of specific volatile ingredients produces an artificially flavored oil which has a pleasant aroma at room temperature and at elevated temperatures. A full balanced flavor impression is achieved when foods containing the flavor are eaten.

It is an object of this invention therefore to produce an edible oil or fat comprising an artificial butter flavor and which has a pleasant aroma at room temperature and at cooking or grilling temperatures.

It is another object of this invention to produce an edible oil or fat which maintains a balanced flavor after cooking because the volatile components have not been lost.

It is a further object of this invention to produce a flavored edible oil or fat which has improved shelf stability.

Detailed description of the invention

Artificial flavorants are made up of a number of ingredients or components. These components vary widely in their physical properties. Often, however, they are either water-soluble and substantially insoluble or slightly soluble in oil or are conversely oil-soluble and substantially insoluble or slightly soluble in water. Therefore, many artificial flavors are either suspended in the oil or water matrix or emulsified therein using surface active agents. In some cases, the flavors are totally encapsulated in order to incorporate them into the oil or water medium.

Certain food flavor components have low aroma thresholds, i.e. a very small amount produces a detectable odor. At specific low concentrations this detectable odor may be very pleasant. At high concentrations the aroma often has a very different character. The combination of high volatility and low aroma threshold is particularly acute when the flavor components have offensive or neauseating aromas at higher concentrations. The high volatility allows them to vaporize from the flavored food at a faster rate than the other less-volatile components. This causes the aroma above the flavored food to be less appetizing or pleasant since the concentration of the malodorous components is higher than in the unvolatilized flavor which was incorporated into the food. In addition, the flavor remaining in the food is not properly balanced since these volatile components contribute importantly to the full flavor composition.

Specifically, those butter flavor components which have been identified as being volatile malodorous flavor components at higher concentrations are diacetyl butanoic acid and hexanoic acid.

As used herein, "volatile malodorous flavor component" means the ingredient of a total flavor which has an offensive odor, i.e. unpleasant, sulfury, nauseating, pungent, or repulsive at higher concentrations.

Diacetyl is a key component in butter flavors, and yet it is a volatile malodorous substance.

Surprisingly, it has been found that to overcome the malodor associated with these volatile components, and to produce a pleasant smelling, storage-stable, good-flavored product, only the herein specified volatile malodorous components need be encapsulated in a material which is not soluble in the oil or fat. Thus, the total flavor composition which is to be added to an edible fat or oil consists of the herein specified volatile malodorous flavor components encapsulated in an oil-insoluble, water-soluble encapsulating agent and other unecapsulated flavor material comprising a mixture of deltadodecalactone, octanoic acid and decanoic acid.

The volatile malodorous flavor components utilized herein are insoluble or slightly soluble in oil and therefore water-soluble. Therefore, the most important advantage derived from this partial encapsulation of the flavor material is that these volatile and malodorous flavor and aroma components are released only when water is added externally. Water provides a vehicle for the release of the flavors as the water-soluble colloidal encapsulating agent and volatile flavor components begin to disperse upon contact with water.

The rate and completeness of flavor release are enhanced, it is believed, by abrasive forces resulting from water-flavor particle interaction. Fried potatoes or fried eggs are specific examples of foods which may be so prepared and which may have a noted flavor carrythrough. Physical fracture caused by spreading the oil or fat or by frying foods in it, as well as in mastication also contributes to the flavor release.

As noted above, it is essential that the encapsulating material be oil-insoluble, and water-soluble. Water solubility ensures ready release of the flavor components when the encapsulated particles are moistened or dispersed in water. The normal source of water will be foods being fried, baked, cooked or grilled or otherwise prepared in flavor-enriched shortening. The saliva in the mouth is also a source of water which will release the flavor components.

The preferred encapsulating agents used in this invention are natural gums. The preferred encapsulating gum is dextrin. Dextrim is an intermediate product formed by the hydrolysis of starches. Industrially, it is made by the treatment of various starches with dilute acids or by heating dry starch. The yellow or white powder granules are soluble in water; insoluble in alcohol and ether.

The encapsulating agent-flavorant mixture are generally blended in the proportion of 1 to 200 parts of encapsulating agent to 1 part of flavor components. The preferred ratio is 2 to 60 parts of encapsulating agent to one part of flavorant.

Any conventional encapsulating technique can be used. The preferred method utilizes a spray-drying technique to prepare solid particles containing entrapped volatile components of the total flavor or aroma. The volatile components of the flavor are first thoroughly mixed in a water solution of a water-soluble protective coating material such as gelatin, gum arabic, starch or dextrin. This mixture is then sprayed into a column of heated air or gases, which evaporates the water. It is believed that the dry particles resulting from this process comprise a shell or capsule of dry colloid in which the flavoring material is embedded or encapsulated in the form of minute droplets. The flavoring material may also be absorbed into the coating material. This procedure permits the volatile flavor components to be put into a solid, highly water-soluble form which easily lends itself to blending with a wide variety of other ingredients, while also offering protection against evaporation of the volatile components.

The partially encapsulated flavor is added to an edible fat or oil, such as plastic shortenings, liquid shortenings, salad oils, vegetable oils, margarine oils and edible triglycerides, in general. The edible fats and oils can be hydrogenated or unhydrogenated, and can contain mixtures of animal and vegetable fats and oils.

Preferably, the encapsulated flavor components and other components of the flavor are incorporated into the edible fats or oils at temperatures of from 50°F to 150°F (10°C to 65.6°C) and in quantities within the range of from 0.001% to 5% based on the edible fat or oil weight. Any suitable method can be used to add the flavor to the edible fat or oil ingredient. When added to plastic shortenings, the total flavor can be conveniently added in conjunction with the plasticizing operation. It is important that sufficient mixing occurs so that the encapsulated particles as well as the other flavor components are uniformly dispersed and suspended in the edible fats or oils.

The mixing and manufacturing procedures are adjusted so that the particle size of the final encapsulated flavoring particle is 420 microns or less. Preferably, the particles will be 1 to 300 microns in size, more preferably from 50 to 100 microns in size.

The actual particle size will depend upon the type of edible fat or oil used. Larger or smaller particles and more or less dense particles tend to migrate or separate out in liquid shortenings and oils under storage conditions. Particle size in plastic shortenings is not critical, as particle suspension is not a problem.

Other components can also be present in the flavored oils of this invention. These materials include salts, spices, oleoresins, natural flavorants, and soluble artificial flavorants.

Best modes of practicing the invention

## Example 1

| | Parts of flavor |
|---|---|
| Butanoic acid | 5.8 |
| Hexanoic acid | 1 |
| Octanoic acid | 6.8 |
| Decanoic acid | 41.4 |
| Deltadecalactone | 4.4 |
| Gamma dodecalactone | 1.4 |
| Deltadodecalactone | 10.4 |
| Diacetyl | 2.2 |

The butanoic acid, hexanoic acid and diacetyl are encapsulated in the dextrin using a standard spray-drying technique. The encapsulated materials and the other flavor components are then mixed with partially hydrogenated soybean oil at about room temperature in a Hobart mixer. The amount of dextrin in the final flavored oil is 240 ppm (.024%), the total amount of flavor components in the oil is 244 ppm (.024%). A butter-flavored oil having a pleasant aroma is produced.

When these same flavor ingredients are added to the oil without encapsulating the hexanoic acid, butanoic acid and diacetyl, the oil has an acrid aroma even at room temperature.

When eggs and hashed browned potatoes are fried in the oil prepared in Example 1, they have a buttery taste.

## Claims

1. An edible oil or fat comprising a butter flavor composition characterised in that the butter flavor composition consists of

(a) a mixture of diacetyl, butanoic acid, and hexanoic acid encapsulated in an oil-insoluble, water-soluble encapsulating agent; and

(b) other unencapsulated flavor material comprising a mixture of deltadodecalactone, octanoic acid and decanoic acid,

wherein the edible oil or fat has a pleasant aroma at room and cooking temperatures and wherein a full balanced flavor impression is achieved when the edible oil or fat is eaten or is used in preparing foods.

2. A composition according to Claim 1 characterised in that the encapsulating agent is a natural gum.

## Patentansprüche

1. Eßbares Öl oder Fett, enthaltend eine Butteraromazusammensetzung, dadurch gekennzeichnet, daß die Butteraromazusammensetzung aus

a) einer Mischung aus Diacetyl, Butansäure und Hexansäure, verkapselt in einem ölunlöslichen, wasserlöslichen Verkapselungsmaterial, und

b) anderem nicht verkapseltem Aromamaterial, enthaltend eine Mischung aus Deltadodecalacton, Octansäure und Decansäure,

besteht, worin das eßbare Öl oder Fett bei Raumtemperatur und Kocktemperatur ein angenehmes Aroma hat und worin der Eindruck eines vollständig ausgewogenen Aromas erreicht ist, wenn das eßbare Öl oder Fett gegessen wird oder bei der Herstellung von Nahrungsmitteln verwendet wird.

2. Eine Zusammensetzung gemäß Anspruch 1, dadurch gekennzeichnet, daß das Verkapselungsmaterial ein Naturgummi ist.

## Revendications

1. Huile ou graisse comestible comprenant une composition à arôme de beurre, caractérisée en ce que cette composition à arôme de beurre et constituée par:

a) un mélange de diacétyle, d'acide butanoïque et d'acide hexanoïque enrobé dans un agent d'enrobage insoluble dans l'huile, soluble dans l'eau; et

b) un autre produit aromatique non enrobé comprenant un mélange de delta docécalactone, d'acide octanoïque et d'acide docanoïque,

où l'huile ou la graisse comestible possède un arôme plaisant à la température ambiante et aux températures de cuisson et où on obtient une impression d'un arôme tout-à-fait équilibré quand l'huile ou la graisse comestible est mangée ou utilisée dans la préparation d'aliments.

2. Composition selon la revendication 1, caractérisée en ce que l'aget d'enrobage est un caoutchouc naturel.